# EUROPEAN PATENT APPLICATION

(11) **EP 2 759 960 A1**
(43) Date of publication of application: **30.07.2014**
(21) Application number: 13797177.6
(22) Date of filing: 21.03.2013
(51) Int. Cl.: G06K 17/00, G06F 21/34, G06K 7/00, G06K 19/06, G06K 19/10

(54) **IDENTIFICATION INFORMATION MANAGEMENT SYSTEM, METHOD FOR CONTROLLING IDENTIFICATION INFORMATION MANAGEMENT SYSTEM, INFORMATION PROCESSING DEVICE, PROGRAM, AND INFORMATION STORAGE MEDIUM**

(30) Priority: 31.05.2012 JP 2012125468
(71) Applicant: Rakuten, Inc., Tokyo 140-0002 (JP)
(72) Inventor: WATANABE, Yasuharu, Tokyo 140-0002 (JP)
(74) Representative: HOFFMANN EITLE
(86) International application number: PCT/JP2013/058167
(87) International publication number: WO 2013/179741

(57) **Abstract**

To provide an identification information managing system capable of preventing an identification code image indicating identification information on a user from being obtained and used by other people while preventing increase of frequency of update of the identification information. An identification information storage unit (60) stores identification information on a user. A display control unit (74) displays an identification code image indicating the identification information on a display unit of a user terminal (20). A detection unit (62) detects a predetermined event indicating that there is a possibility that the identification code image is obtained by other people while the identification code image is displayed on the display unit of the user terminal (20). An update unit (68) updates the identification information stored in the identification information storage unit (60), based on a result of detection by the detection unit (62). In the case where the identification information is updated, the display control unit (74) displays an identification code image indicating the updated identification information on the display unit of the user terminal (20).

## Description

### TECHNICAL FIELD

The present invention relates to an identification information managing system, a control method for an identification information managing system, an information processing device, a program, and an information storage medium.

### BACKGROUND ART

There has been known a point service for imparting a point to a user having bought a product or used a service at a shop. According to such a point service, a bar code indicating identification information on a user is printed on a point card, the point card is given to the user as a membership card (see Patent Document 1) . The user can obtain or use a point by presenting the point card when buying a product or using a service.

Further, according to the above mentioned point service, a membership program for causing a user terminal (for example, a portable phone) to function as a membership card may be installed in the user terminal, and the user terminal may be used instead of the point card. When the membership program is activated in this user terminal, a bar code image indicating identification information on a user is displayed on a display unit. A user can obtain or use a point by presenting the bar code image displayed on the display unit of the user terminal when buying a product or using a service.

### Citation List

### Patent Literature

### Patent Literature 1: JP07-037162A

### SUMMARY OF INVENTION

### Technical Problem

When the above mentioned user terminal is used as the membership card, there is a possibility that the bar code image displayed on the display unit of the user terminal is obtained by other people. For example, the other people can obtain the bar code image by photographing the bar code image displayed on the display unit of the user terminal, using a photographing device. If the bar code image is obtained by other people, there is a possibility that the point is fraudulently used, using the bar code image.

A method for frequently updating identification information on a user (a bar code image) may be available as a method for preventing a bar code image from being obtained and used by other people. However, as the length (the number of digits) of identification information is finite, and the number of identification information items is limited, frequent update of identification information on a user is not practicable.

The present invention has been conceived in view of the above, and aims to provide an identification information managing system, a control method for an identification information managing system, an information processing device, a program, and an information storage medium capable of preventing an identification code image indicating identification information on a user from being obtained and used by other people while preventing increase of frequency of update of the identification information.

### Solution to Problem

In order to achieve the above mentioned object, an identification information managing system according to the present invention includes identification information storage means for storing identification information on a user; means for displaying an identification code image indicating the identification information on display means of a user terminal; detection means for detecting a predetermined event indicating that there is a possibility that the identification code image is obtained by other people while the identification code image is displayed on the display means; update means for updating the identification information stored in the identification information storage means, based on a result of detection by the detection means; and means for displaying the identification code image indicating the updated identification information on the display means in the case where the identification information is updated.

Further, a control method for an identification information managing system according to the present invention includes a step of accessing identification information storage means for storing identification information on a user; a step of displaying an identification code image indicating the identification information on display means of a user terminal; a detection step of detecting a predetermined event indicating that there is a possibility that the identification code image is obtained by other people while the identification code image is displayed on the display means; an update step of updating the identification information stored in the identification information storage means, based on a result of detection at the detection step; and a step of displaying the identification code image indicating the updated identification information on the display means in the case where the identification information is updated.

Further, an information processing device according to the present invention includes means for obtaining a result of detection as to whether or not a predetermined event is detected while an identification code image is displayed on display means of a user terminal, the predetermined event indicating that there is a possibility that the identification code image is obtained by other people, and the identification code image indicating identification information stored in an identification information storage unit for storing identification information on a user; and means for determining, based on a result of the detection, whether or not to update the identification information stored in the identification information storage means. Note here that the "information processing device" may be an information processing device other than the user terminal or the user terminal itself. The "means for obtaining a result of detection as to whether or not a predetermined event is detected" may be "means for obtaining the result of detection by determining whether or not the predetermined event is detected" or "means for obtaining (receiving) the result of detection made by another device via a communication network".

Further, a program according to the present invention is a program for causing a computer to function as means for obtaining a result of detection as to whether or not a predetermined event is detected while an identification code image is displayed on display means of a user terminal, the predetermined event indicating that there is a possibility that the identification code image is obtained by other people, and the identification code image indicating identification information stored in identification information storage means for storing identification information on a user; and means for determining, based on a result of the detection, whether or not to update the identification information stored in the identification information storage means. Note here that a "computer" may be a computer other than the user terminal or the user terminal itself. The "means for obtaining a result of detection as to whether or not a predetermined event is detected" may be "means for obtaining the result of detection by determining whether or not the predetermined event is detected" or "means for obtaining (receiving) the result of detection made by another device via a communication network".

Further, an information storage medium according to the present invention may be a computer readable information storage medium storing the above mentioned program.

Further, according to one aspect of the present invention, the detection means may include means for detecting the predetermined event, based on a period of time elapsed while the identification code image is displayed on the display means.

Further, according to one aspect of the present invention, the detection means may include means for detecting a fact that a situation in which the identification code image is displayed on the display means continues for a reference period of time, as the predetermined event.

Further, according to one aspect of the present invention, the detection means may include means for detecting a fact that a sum of periods of time during which a same identification code image is displayed on the display means reaches a reference period of time, as the predetermined event.

Further, according to one aspect of the present invention, the user terminal may include photographing means for photographing an object opposite to the display means, and the detection means may include means for detecting the predetermined event, based on a result of determination as to whether or not a predetermined object is appeared on an image photographed by the photographing means while the identification code image is displayed on the display means.

Further, according to one aspect of the present invention, the detection means may include means for detecting a fact that a situation, in which light from a light source of a reading device for reading the identification code image is not appeared on the image photographed by the photographing means, continues for a reference period of time while the identification code image is displayed on the display means, as the predetermined event.

Further, according to one aspect of the present invention, the detection means may include means for detecting a fact that a photographing device is appeared on the image photographed by the photographing means while the identification code image is displayed on the display means, as the predetermined event.

Further, according to one aspect of the present invention, the user terminal may include sound input means, and the detection means may include means for detecting the predetermined event, based on a result of determination as to whether or not a predetermined sound is input from the sound input means while the identification code image is displayed on the display means.

Further, according to one aspect of the present invention, the detection means may include means for detecting a fact that a photographing sound is input from the sound input means while the identification code image is displayed on the display means, as the predetermined event, the photographing sound being output from a photographing device other than the user terminal in the case where the photographing device executes photographing.

Further, according to one aspect of the present invention, the detection means may include means for detecting the predetermined event, based on a result of determination as to whether or not processing for obtaining image data is executed in the user terminal while the identification code image is displayed on the display means.

Further, according to one aspect of the present invention, the detection means may include means for detecting a fact that the processing for obtaining the image data is executed in the user terminal while the identification code image is displayed on the display means, as the predetermined event.

Further, according to one aspect of the present invention, the user terminal may include motion detection means for detecting a motion of the user terminal, and the detection means may include means for detecting the predetermined event, based on a result of determination as to whether or not a result of detection by the motion detection means while the identification code image is displayed on the display means is a predetermined result.

Further, according to one aspect of the present invention, the detection means may include means for detecting a fact that a situation, in which an amount of change in a result of detection by the motion detection means is equal to or smaller than a reference amount, continues for a reference period of time while the identification code image is displayed on the display means, as the predetermined event.

Further, according to one aspect of the present invention, the identification information managing system may further include a server capable of data communication with the user terminal, wherein the detection means may be included in the user terminal, the update means may be included in the server, the user terminal may include means for sending data based on a result of detection by the detection means to the server, the server may include means for receiving the data sent from the user terminal, and the update means may update the identification information stored in the identification information storage means, based on the data received from the user terminal.

Further, according to one aspect of the present invention, the identification information managing system may further include a server capable of data communication with the user terminal, the detection means and the update means may be included in the server, the user terminal may include means for sending data necessary to detect the predetermined event to the server, the server may include means for receiving the data sent from the user terminal, and the detection means may detect the predetermined event, based on the data received from the user terminal.

Further, according to one aspect of the present invention, the detection means and the update means may be included in the user terminal.

Further, according to one aspect of the present invention, the identification information managing system may further include means for reading the identification code image displayed on the display means, and authentication processing execution means for executing authentication processing relevant to the identification information indicated by the identification code image, based on content stored in the identification information storage means, in the case where the identification code image displayed on the display means is read.

### Advantageous Effects of Invention

According to the present invention, it is possible to prevent an identification code image indicating identification information on a user from being obtained and used by other people, while preventing increase of frequency of update of the identification information.

### BRIEF DESCRIPTION OF DRAWINGS

FIG. 1 shows one example of an overall structure of a point system (an identification information managing system) according to an embodiment of the present invention;
FIG. 2 shows one example of a hardware structure of a point managing server;
FIG. 3 shows one example of a hardware structure of a user terminal;
FIG. 4 shows one example of an external appearance of the user terminal;
FIG. 5 shows one example of a user table;
FIG. 6 shows one example of a log-in screen;
FIG. 7 shows one example of a membership card table;
FIG. 8 shows one example of a membership card screen;
FIG. 9 shows one example of processing executed in the point system;
FIG. 10 is a functional block diagram showing one example of a function block of the point system;
FIG. 11 shows one example of processing executed in the user terminal;
FIG. 12 shows another example of processing executed in the user terminal;
FIG. 13 shows another example of processing executed in the user terminal;
FIG. 14 shows one example of processing executed in the point managing server;
FIG. 15 explains update of a membership card ID;
FIG. 16 is a functional block diagram showing another example of the point system; and
FIG. 17 is a functional block diagram showing another example of the point system.

### DESCRIPTION OF EMBODIMENTS

In the following, an example of an embodiment of the present invention will be described in detail based on the drawings. Below, a case in which the present invention is applied to a point system for providing a point service will be described. That is, a case in which an identification information managing system according to an embodiment of the present invention is implemented in a point system for providing a point service will be described.

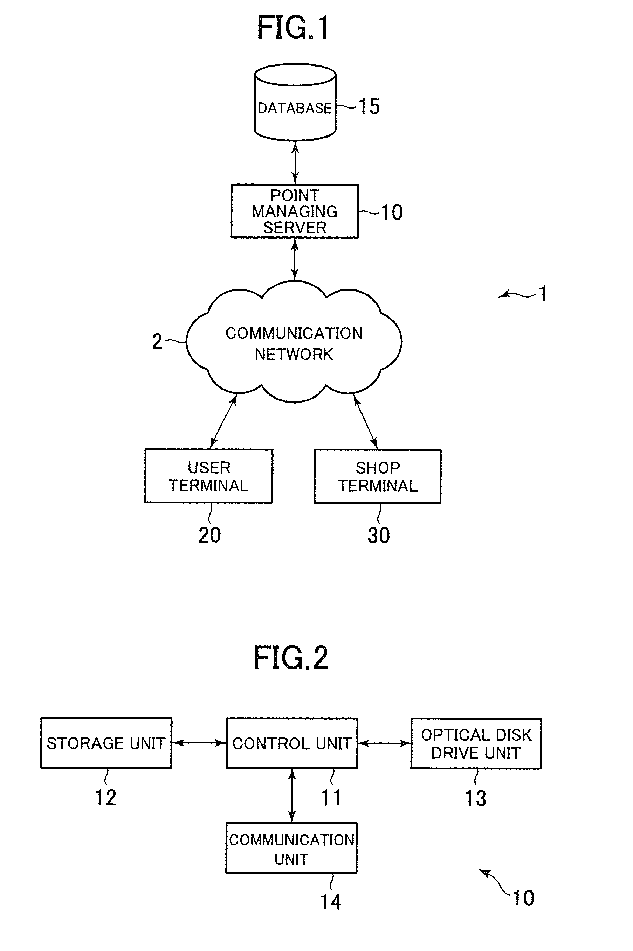

FIG. 1 shows one example of an overall structure of a point system (an identification information managing system) according to an embodiment of the present invention. As shown in FIG. 1, a point system 1 includes a point managing server 10, a database 15, a user terminal 20, and a shop terminal 30.

The point system 1 is a system for providing a people (a user) using a shop with a point service. According to the point service, a point is imparted to a user having bought a product or used a service. The user can receive a variety of privileges based on the point. For example, the user can use a point in the next time of buying a product or using a service. For example, a point can be appropriated for all or a part of payment, based on 1 point = 1 yen.

The point managing server 10 is, for example, a server computer (an information processing device). FIG. 2 shows one example of a hardware structure of the point managing server 10. As shown in FIG. 2, the point managing server 10 includes a control unit 11, a storage unit 12, an optical disk drive unit 13, and a communication unit 14.

The control unit 11 includes, for example, one or more microprocessors, and executes processing according to an operating system or a program stored in the storage unit 12. The storage unit 12 includes a main memory unit and an auxiliary storage unit. For example, the main memory unit is a RAM, and the auxiliary storage unit is a hard disk, a solid state drive, or the like.

The optical disk drive unit 13 reads a program and data recorded on an optical disk (an information storage medium). A program and data is supplied to the storage unit 12 via an optical disk. That is, a program and data recorded on an optical disk is read by the optical disk drive unit 13, and stored in the storage unit 12.

The point managing server 10 may include a structural component for reading a program or data stored in an information storage medium other than an optical disk (for example, a memory card), so that the program and data is supplied to the storage unit 12 via an information storage medium other than an optical disk.

The communication unit 14 is a device for executing data communication via the communication network 2. A program and data may be supplied to the storage unit 12 via the communication network 2.

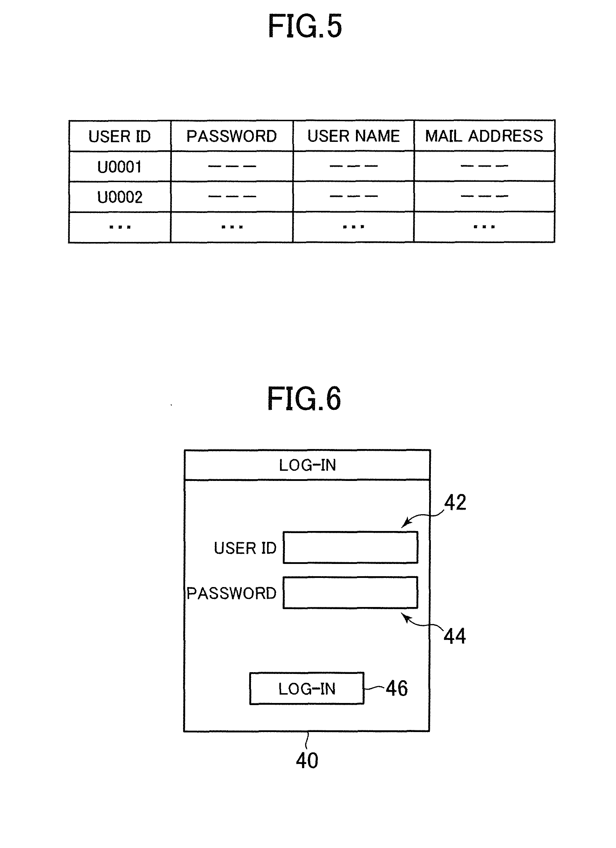

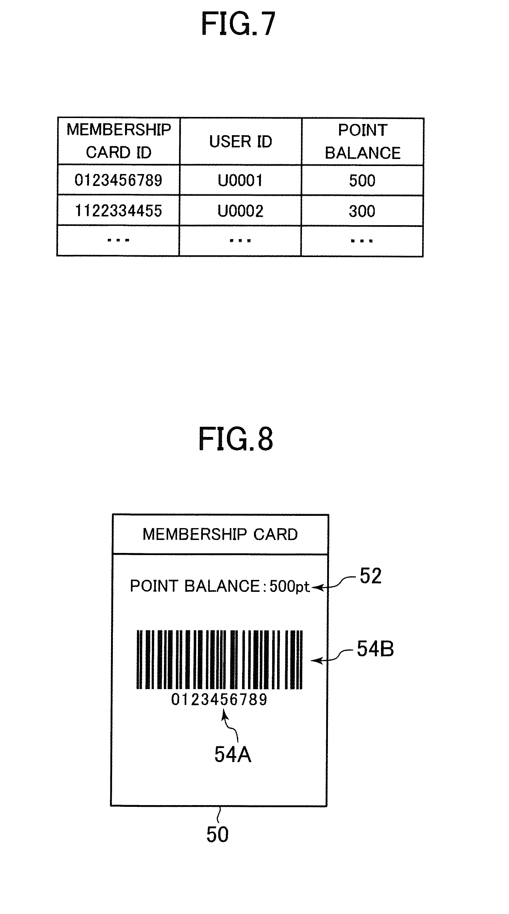

The point managing server 10 can access the database 15. The database 15 may be created in the point managing server 10 or a server other than the point managing server 10. Information necessary to provide the point service is stored in the database 15. Information stored in the database 15 will be described later (see FIGs. 5 and 7).

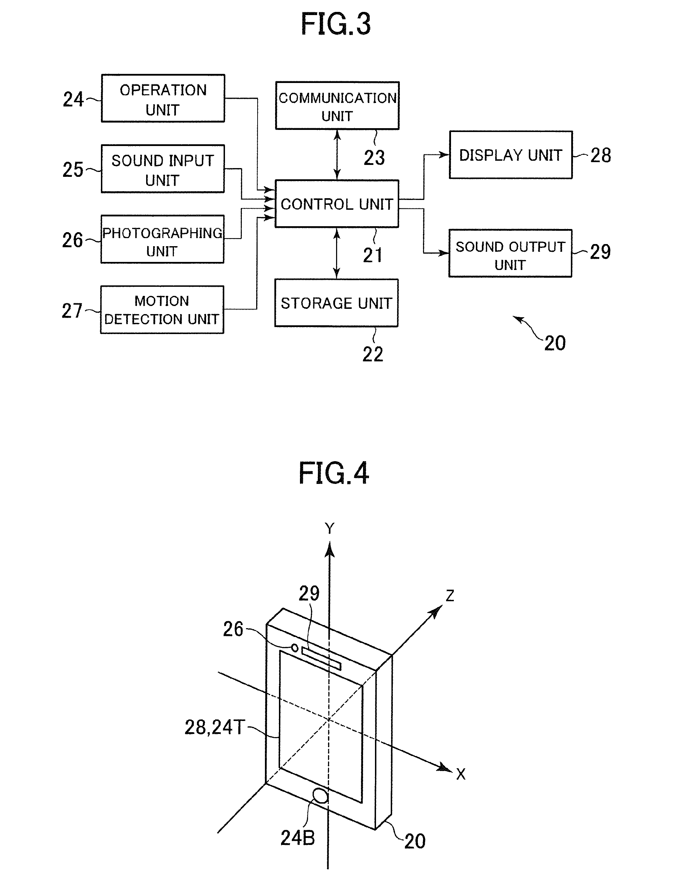

The user terminal 20 is a portable information processing device for use by a user. For example, the user terminal 20 is a portable phone (including a smart phone) or a portable information terminal. FIG. 3 shows one example of a hardware structure of the user terminal 20, and FIG. 4 shows one example of an external appearance of the user terminal 20.

As shown in FIG. 3, the user terminal 20 includes a control unit 21, a storage unit 22, a communication unit 23, an operation unit 24, a sound input unit 25, a photographing unit 26, a motion detection unit 27, a display unit 28, and a sound output unit 29. The control unit 21 includes, for example, one or more microprocessors, and executes information processing according to an operating system or a program stored in the storage unit 22. The storage unit 22 includes a main memory unit and an auxiliary storage unit. The main memory unit is, for example, a RAM, and the auxiliary storage unit is, for example, a hard disk or a solid state drive.

The communication unit 23 is a unit for data communication with another device via the communication network 2. Data communication is possible via the communication network 2 between the user terminal 20 and the point managing server 10.

A program and data is supplied via the communication network 2 to the storage unit 22 of the user terminal 20. Note that the user terminal 20 may include a structural component for reading a program or data stored in an information storage medium, such as a memory card, an optical disk, or the like, so that the program or data read from the information storage medium may be stored in the storage unit 22.

The operation unit 24 is used by a user to operate. For example, the operation unit 24 includes a button 24B formed on the front surface of the user terminal 20 (see FIG. 4). Note that the operation unit 24 may include an operating member other than the button 24B (for example, a stick, a lever, or the like).

The operation unit 24 includes a designated position detection unit for detecting a position designated by a user in a screen on the display unit 28. For example, the operation unit 24 includes a touch panel 24T formed on the display unit 28 (see FIG. 4). The touch panel 24T is a general touch panel, and detects a position touched by a user.

The sound input unit 25 is, for example, a microphone. A sound generated by a sound source near the user terminal 20 is input from the sound input unit 25.

The photographing unit 26 is an imaging element, such as, for example, a CCD. As shown in FIG. 4, the photographing unit 26 is provided on the same surface as the surface where the display unit 28 is provided, and used to photograph an object opposite to the display unit 28. The photographing unit 26 can photograph a static image. Further, the photographing unit 26 can photograph a motion picture as well. For example, the photographing unit 26 photographs an image for every predetermined period of time (for example, 1/60^{th} of a second). That is, the photographing unit 26 photographs a motion picture including a predetermined number of frames (for example, sixty) per second. A static image or a motion picture photographed by the photographing unit 26 is stored in the storage unit 22.

The motion detection unit 27 includes one or more sensors for detecting a motion of the user terminal 20. For example, the motion detection unit 27 includes at least one of an acceleration sensor and a gyro sensor.

An acceleration sensor detects an acceleration in three respective orthogonal axial directions (the x axial direction, the y axial direction, and the z axial direction). As shown in FIG. 4, the user terminal 20 has a rectangular shape, in which, for example, the x axis corresponds to the shorter side direction of the user terminal 20, the y axis to the longitudinal direction of the user terminal 20, and the z axis to the depth direction of the user terminal 20.

A gyro sensor detects an angular speed in three respective orthogonal axes (the x axial direction, the y axial direction, and the z axial direction). That is, a gyro sensor detects a rotation amount per unit time when the user terminal 20 rotates around the x axial direction as a rotation axis. Similarly, the gyro sensor detects a rotation amount per unit time when the user terminal 20 rotates around the y axial direction as a rotation axis. Further, the gyro sensor detects a rotation amount per unit time when the user terminal 20 rotates around the z axial direction as a rotation axis.

Information indicating a result of detection by the motion detection unit 27 is supplied to the control unit 21 for every predetermined period of time (for example, 1/60^{th} of a second). The control unit 21 determines a motion of the user terminal 20, based on the result of detection by the motion detection unit 27.

The display unit 28 is, for example, a liquid crystal display unit, an organic EL display unit, or the like, and displays a screen according to an instruction from the control unit 21. Note that the user terminal 20 has a screen capture function (screen data obtaining means). A screen capture function is a function of obtaining image data indicating a screen displayed on the display unit 28, and storing the image data in the storage unit 22. For example, when a user performs a predetermined operation to instruct execution of screen capture, the screen capture is executed, and image data indicating a screen displayed at that time on the display unit 28 is stored in the storage unit 22.

The sound output unit 29 is, for example, a speaker, a headphone, or the like, and outputs a sound according to an instruction from the control unit 21.

The shop terminal 30 is an information processing device located at a shop. For example, the shop terminal 30 is a POS register. The shop terminal 30 includes a reading device for reading a bar code, and can read a bar code printed on a point card or displayed on a display unit of a portable terminal (the user terminal 20). Further, data communication is possible via the communication network 2 between the shop terminal 30 and the point managing server 10.

As described above, a point service is provided at a shop. That is, when a user buys a product or uses a service, a point is imparted to the user presenting a membership card. Further, when the user buys a product or uses a service, the user can appropriate a point for all or a part of payment by presenting a membership card. Still further, in a point service, a membership card program for causing the user terminal 20 to function as a membership card is installed in a user terminal 20, and the user terminal 20 is used as the membership card.

Below, a procedure to be performed by a user to use the above described point service will be described. Initially, the user performs a procedure for user registration to use a point service. For example, the user accesses from the user terminal 20 a user registration web page provided by the point managing server 10, and then inputs his/her own information (for example, name, password, address, mail address, and so forth) in a user registration screen displayed on the display unit 28 of the user terminal 20.

The information input in the user registration screen is sent to the point managing server 10, and stored in the database 15. In this case, a user ID for uniquely identifying the user is generated, and the information input in the user registration screen is stored so as to be correlated to the user ID. Note that the user may be allowed to designate a user ID.

FIG. 5 shows one example of a user table stored in the database 15. A user table is a table for storing information input in the user registration screen so as to be correlated to a user ID, and shows a list of users using a point service. For example, the user table includes "user ID", "password", "user name", and "mail address" fields.

A user ID for uniquely identifying a user is registered in the "user ID" field. A password specified by the user is registered in the "password" field. The name and a mail address of the user are registered in the "user name" and "mail address" fields, respectively.

After completion of the user registration procedure, a user accesses from the user terminal 20 a server that provides a membership card program to download the membership card program to the user terminal 20. A "server that provides a membership card program" may be the point managing server 10 or a different server.

Upon completion of download of the membership card program, the user activates the membership card program in the user terminal 20. Upon initial activation of the membership card program, a log-in screen is displayed. FIG. 6 shows one example of a log-in screen. A log-in screen 40 includes an input field 42 for inputting a user ID and an input field 44 for inputting a password. A user inputs his/her user ID and password into the respective input fields 42, 44, and then clicks a log-in button 46.

When the user clicks on the log-in button 46, the user ID and the password input in the respective input field 42, 44 are sent to the point managing server 10 to determine whether or not the combination of the user ID and the password is authentic. When it is determined that the combination of the user ID and the password is authentic, a membership card ID is newly issued, and the user ID input in the log-in screen 40 and the newly issued membership card ID are registered in the database 15 so as to be correlated to each other.

FIG. 7 shows one example of the membership card table stored in the database 15. The membership card table shows a list of membership cards possessed by users. For example, the membership card table includes "membership card ID", "user ID", and "point balance" fields.

A membership card ID (identification information) for uniquely identifying a membership card is registered in the "membership card ID" field. The user ID of a user having the membership card is registered in the "user ID" field. The balance of points imparted to the membership card is registered in the "point balance" field.

When a membership card ID is newly issued, the membership card ID is stored in the storage unit 22 of the user terminal 20, and a membership card screen is displayed on the display unit 28 of the user terminal 20. FIG. 8 shows one example of the membership card screen. A point balance 52 is shown in the membership card screen 50. Further, a membership card ID 54A and a bar code image 54B are shown in the membership card screen 50. The membership card ID 54A is a newly issued membership card ID, and the bar code image 54B is a bar code indicating the membership card ID 54A.

When the user buys a product or uses a service at a shop, the user presents the membership card screen 50. In this case, the bar code image 54B shown in the membership card screen 50 is read by the shop terminal 30, so that a point is imparted or used.

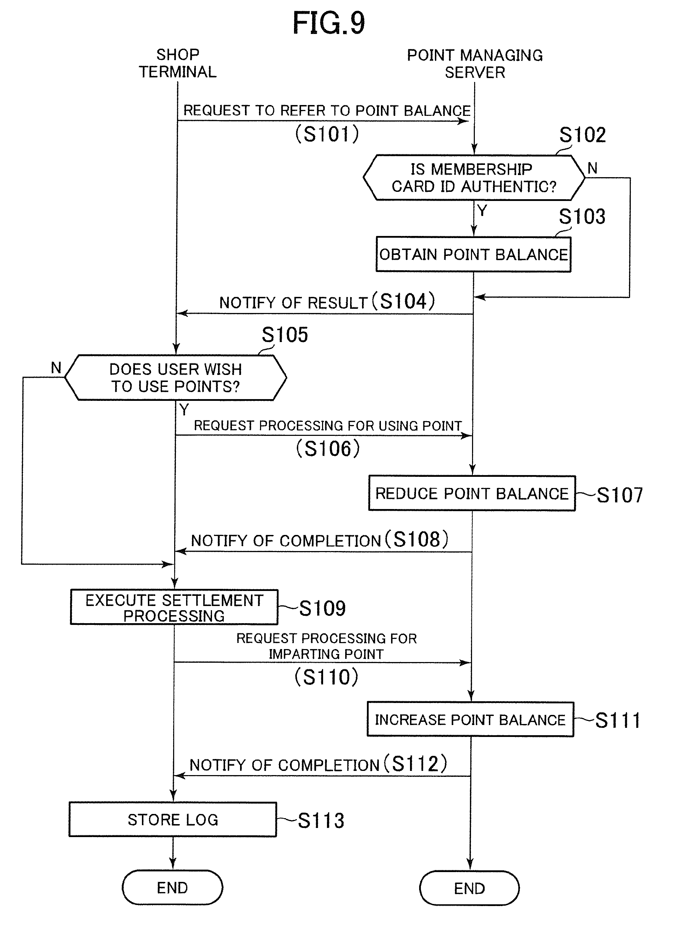

Below, one example of processing that is executed in the point system 1 when the shop terminal 30 reads the bar code image 54B shown in the membership card screen 50 will be described. FIG. 9 shows one example of the processing.

As shown in FIG. 9, initially, the control unit of the shop terminal 30 requests the point managing server 10 to refer to the point balance (S101). In this case, the membership card ID indicated by the bar code image 54B shown in the membership card screen 50 presented by the user is sent to the point managing server 10.

When the point managing server 10 receives the above described request, the control unit 11 (authentication processing execution means) executes authentication processing for authenticating the membership card ID received from the shop terminal 30. That is, the control unit 11 accesses the membership card table to determine whether or not the membership card ID received from the shop terminal 30 is authentic (S102). Specifically, the control unit 11 determines whether or not the membership card ID received from the shop terminal 30 is registered in the membership card table.

When the membership card ID is not authentic, the control unit 11 notifies the shop terminal 30 of the fact that the membership card ID is not authentic (S104). Meanwhile, when the membership card ID is authentic, the control unit 11 obtains the point balance of the membership card ID from the membership card table (S103), and notifies the shop terminal 30 of the point balance (S104).

When the shop terminal 30 receives the notice from the point managing server 10, the content of the notice is displayed on the display unit of the shop terminal 30. A salesperson at the shop asks the user whether or not the user wishes to use the point, in consideration of the content displayed in the shop terminal 30. When the user wishes to use the point, the salesperson performs an operation to instruct to use the point. Note that in a case where a membership card ID is not authentic, a user cannot use the point, and the salesperson cannot perform the operation to instruct to use the point in the shop terminal 30.

The control unit of the shop terminal 30 determines whether or not the user wishes to use the point (S105). When the user wishes to use the point, the control unit requests the point managing server 10 to execute processing for using the point (S106). In this case, information indicating an amount of payment to be paid by the user is sent to the point managing server 10 together with the membership card ID indicated by the bar code image 54B shown in the membership card screen 50 presented by the user.

When the point managing server 10 receives the above described request, the control unit 11 reduces the point balance of the membership card ID received from the shop terminal 30 (S107).

Below, assume a case in which a payment to be paid by the user is 800 yen and the membership card ID received from the shop terminal 30 is "0123456789". In this case, the control unit 11 obtains the point balance of the membership card ID "0123456789", with reference to the membership card table. In the example shown in FIG. 7, 500 points are obtained. In this case, the point balance is smaller than the amount of payment to be paid by the user (800 yen), all of the points of the membership card ID "0123456789" are used. That is, the point balance of the membership card ID "0123456789" is updated to zero. Further, in this case, 300 yen is left as a payment to be paid by the user.

Below, assume a case in which a payment to be paid by the user is 300 yen and the membership card ID received from the shop terminal 30 is "0123456789". In this case as well, the control unit 11 obtains the point balance of the membership card ID "0123456789", with reference to the membership card table. In the example shown in FIG. 7, 500 points are obtained. In this case, the point balance is larger than the amount of payment to be paid the user (300 yen), only points corresponding to the amount of payment to be paid by the user (300 yen), out of the points of the membership card ID "0123456789", are used. That is, the point balance of the membership card ID "0123456789" is deducted by 300 points. In this case, none is left as a payment to be paid by the user.

After execution of step S107, the control unit 11 notifies the shop terminal 30 of completion of the processing for using the point (S108). In this case, the used points and the remaining payment to be paid by the user are notified to the shop terminal 30. Note that only either one of the used points and the remaining payment to be paid by the user may be notified to the shop terminal 30.

When the shop terminal 30 receives the above described notice, the control unit of the shop terminal 30 displays the content of the notice on the display unit. A salesperson at a shop checks the content, and then performs an operation for settlement processing. The control unit of the shop terminal 30 executes the settlement processing according to the operation by the salesperson (S109).

Upon completion of the settlement processing, the control unit of the shop terminal 30 requests the point managing server 10 to execute processing for imparting the point (S110). In this case, information indicating the point to be imparted to the user and the point used by the user is sent to the point managing server 10 together with the membership card ID. Note that the number of points to be imparted to a user having used the points may be decided based on the amount of original payment or payment actually paid by the user.

When the point managing server 10 receives the above described request, the control unit 11 accesses the membership card table to increase the point balance of the membership card ID received from the shop terminal 30 (S111). That is, the point balance of the membership card ID received from the shop terminal 30 is increased by the amount corresponding to the number of points to be imparted to the user. Thereafter, the control unit 11 notifies the shop terminal 30 of completion of the processing for imparting the point (S112). When the shop terminal 30 receives this notice, the control unit of the shop terminal 30 stores the content of the notice in a storage unit as a log (S113).

Note that although it is described in the above that the processing for imparting the point is executed immediately after completion of the settlement processing, the processing for imparting the point may be collectively executed during, for example, a time band with a fewer processing load (for example, at midnight) .

In the above described point system 1, there is a possibility that the bar code image 54B displayed on the display unit 28 of the user terminal 20 is obtained by other people. For example, it can be assumed that the bar code image 54B is obtained by other people by photographing the bar code image 54B displayed on the display unit 28 of the user terminal 20, using a photographing device. Supposing that the bar code image 54B is obtained by other people, there is a possibility that the point is fraudulently used by the other people, using the bar code image 54B.

In the following, a structure for preventing the bar code image 54B displayed on the display unit 28 of the user terminal 20 from being obtained and used by other people will be described.

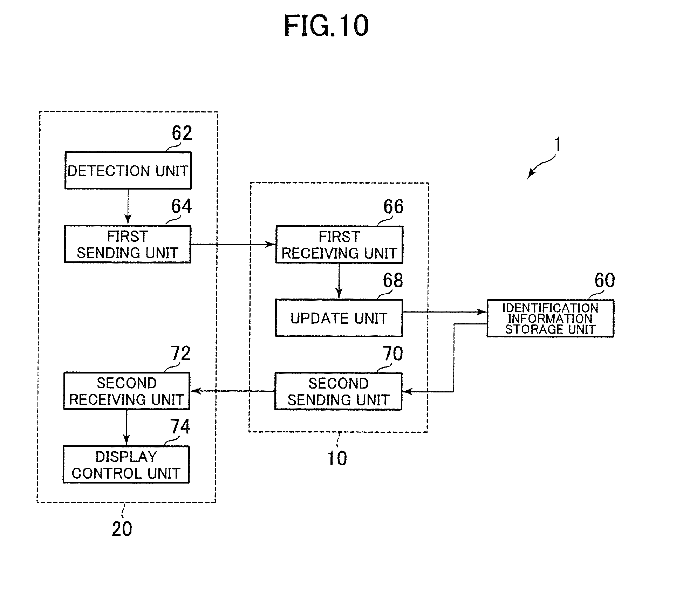

FIG. 10 is a functional block diagram showing one example of a function block implemented in the point system 1 (the identification information managing system). As shown in FIG. 10, the point system 1 includes an identification information storage unit 60, a detection unit 62, a first sending unit 64, a first receiving unit 66, an update unit 68, a second sending unit 70, a second receiving unit 72, and a display control unit 74.

For example, the identification information storage unit 60 is implemented using the database 15. Further, for example, the detection unit 62, the first sending unit 64, the second receiving unit 72, and the display control unit 74 are implemented using the control unit 21 of the user terminal 20, and the first receiving unit 66, the update unit 68, and the second sending unit 70 are implemented using the control unit 11 of the point managing server 10.

The identification information storage unit 60 will be described. The identification information storage unit 60 stores identification information on a user. For example, the identification information storage unit 60 stores a membership card table, such as is shown in FIG. 7. In this case, a membership card ID registered in the membership card table corresponds to the above described "identification information".

The detection unit 62, the first sending unit 64, the first receiving unit 66, and the update unit 68 will be described. Specifically, the detection unit 62 and the update unit 68 will be first described, and the first sending unit 64 and the first receiving unit 66 will be thereafter described.

The detection unit 62 detects a predetermined event indicating a possibility that an identification code image has been obtained by other people while the identification code image is displayed on the display unit 28 of the user terminal 20.

For example, the detection unit 62 detects the above mentioned "predetermined event" based on any one of the followings [A] to [E].
[A] A period of time having elapsed while the identification code image is displayed on the display unit 28 of the user terminal 20;
[B] An image photographed by the photographing unit 26 while the identification code image is displayed on the display unit 28 of the user terminal 20;
[C] A sound input from the sound input unit 25 while the identification code image is displayed on the display unit 28 of the user terminal 20;
[D] Presence/absence of execution of screen capture while the identification code image is displayed on the display unit 28 of the user terminal 20; and
[E] A result of detection by the motion detection unit 27 while the identification code image is displayed on the display unit 28 of the user terminal 20.

The update unit 68 updates the identification information stored in the identification information storage unit 60, based on a result of detection by the detection unit 62. Specifically, when the above mentioned "predetermined event" is detected by the detection unit 62, the update unit 68 generates new identification information, and updates the identification information on a user from the current identification information to the new identification information.

Note that an "identification code image" is an image indicating identification information. For example, a 1D bar code, a 2D bar code, or the like corresponds to the "identification code image". In the above described example, the membership card ID corresponds to the "identification information", and the bar code image 54B displayed on the membership card screen 50 corresponds to the "identification code image".

An operation of the detection unit 62 and of the update unit 68 will be described. Below, five examples A to E will be described as specific examples of an operation of the detection unit 62 and the update unit 68.

[Example A] For example, the detection unit 62 detects the "predetermined event", based on "a period of time having elapsed while the bar code image 54B is displayed on the display unit 28 of the user terminal 20".

[Example A-1] For example, the detection unit 62 detects a fact that "a situation in which the bar code image 54B is displayed on the display unit 28 of the user terminal 20 continues for a reference period of time" as the "predetermined event". When the above described situation continues for the reference period of time, the update unit 68 updates the membership card ID.

Specifically, when a situation in which the bar code image 54B is displayed on the display unit 28 of the user terminal 20 continues for a relatively long period of time, a possibility that the bar code image 54B could have been obtained by other people during that period cannot be ignored. Regarding this point, according to the above described detection unit 62 and update unit 68, the membership card ID is updated when a situation in which the bar code image 54B is displayed continues for a relatively long period of time. That is, the membership card ID is updated when there is a possibility that the bar code image 54B could have been obtained by other people.

[Example A-2] For example, the detection unit 62 detects a fact that "the sum of the periods of time during which the same bar code image 54B is displayed on the display unit 28 of the user terminal 20 reaches a reference period of time" as the "predetermined event". When the sum reaches the reference period of time, the update unit 68 updates the membership card ID.

For example, when the same bar code image 54B is displayed on the display unit 28 more than twice and the sum of the periods of time during which the bar code image 54B is displayed becomes relatively long, a possibility that the bar code image 54B could have been obtained by other people cannot be ignored. Regarding this point, according to the above described detection unit 62 and update unit 68, the membership card ID is updated in such a case. That is, the membership card ID is updated when there is a possibility that the bar code image 54B could have been obtained by other people.

[Example B] For example, the detection unit 62 detects the "predetermined event" based on a result of determination as to "whether or not a predetermined object is displayed in an image photographed by the photographing unit 26 of the user terminal 20 while the bar code image 54B is displayed on the display unit 28 of the user terminal 20".

[Example B-1] For example, the "predetermined object" is a photographing device (a photographing device other than the user terminal 20 displaying the bar code image 54B). That is, a user terminal 20, a digital camera, or the like, of other people corresponds to the "predetermined object".

In this case, the detection unit 62 detects a fact that "a photographing device is appeared on the image photographed by the photographing unit 26 of the user terminal 20 while the bar code image 54B is displayed on the display unit 28 of the user terminal 20" as the "predetermined event". When a photographing device is appeared on the image photographed by the photographing unit 26, the update unit 68 updates the membership card ID.

The photographing unit 26 of the user terminal 20 is used to obtain an image of an object opposite to the display unit 28. When a photographing device is appeared on the image photographed by the photographing unit 26 while the bar code image 54B is displayed on the display unit 28, a possibility that the bar code image 54B displayed on the display unit 28 could have been photographed by the photographing device cannot be ignored. Regarding this point, according to the above described detection unit 62 and update unit 68, the membership card ID is updated when a photographing device is appeared on the image photographed by the photographing unit 26 while the bar code image 54B is displayed on the display unit 28. That is, the membership card ID is updated when there is a possibility that the bar code image 54B could have been obtained by other people.

[Example B-2] Further, for example, the "predetermined object" may be light emitted from a light source of a reading device for reading a bar code.

In this case, the detection unit 62 detects the "predetermined event" based on a result of determination as to "whether or not light emitted from a light source of a reading device is appeared on the image photographed by the photographing unit 26 of the user terminal 20 while the bar code image 54B is displayed on the display unit 28 of the user terminal 20".

Specifically, the detection unit 62 detects a "fact that a situation, in which light emitted from a light source of a reading device is not appeared on the image photographed by the photographing unit 26, continues for a reference period of time while the bar code image 54B is displayed" as the "predetermined event". When the above described situation continues for the reference period of time, the update unit 68 updates the membership card ID.

In general, when a user presents a membership card at a shop, the membership card screen 50 (the bar code image 54B) is displayed on the display unit 28, and the bar code image 54B is read by the shop terminal 30. In this case, the bar code image 54B is read by the shop terminal 30 within a relatively short period of time after the membership card screen 50 (the bar code image 54B) is displayed.

Therefore, when a situation, in which light emitted from a light source of the reading device is not appeared on the image photographed by the photographing unit 26, continues for a relatively long period of time while the bar code image 54B is displayed, there is a possibility that the membership card screen 50 (the bar code image 54B) is displayed for a purpose different from a normal purpose. For example, there is a possibility that the membership card screen 50 (the bar code image 54B) is displayed on the display unit 28 as other people activate the membership card program in the user terminal 20 for the purpose of obtaining the bar code image 54B by photographing the bar code image 54B using his/her own photographing device.

Regarding this point, according to the above described detection unit 62 and update unit 68, the membership card ID is updated when a situation, in which light emitted from a light source of a reading device is not appeared on the image photographed by the photographing unit 26, continues for a relatively long period of time while the bar code image 54B is displayed. That is, the membership card ID is updated when there is a possibility that the bar code image 54B could have been obtained by other people.

[Example C] For example, the detection unit 62 detects the "predetermined event" based on a result of determination as to "whether or not a predetermined sound is input from the sound input unit 25 while the bar code image 54B is displayed on the display unit 28 of the user terminal 20".

A "predetermined sound" is a photographing sound made by, for example, a photographing device other than the user terminal 20 displaying the bar code image 54B. The "photographing sound" is a sound that is output from the photographing device when the photographing device is photographing, and is, for example, a shutter sound.

In this case, the detection unit 62 detects a "fact that the above described photographing sound is input from the sound input unit 25 while the bar code image 54B is displayed" as the "predetermined event". That is, when the above described photographing sound is input from the sound input unit 25 while the bar code image 54B is displayed, the update unit 68 updates the membership card ID.

A case in which the above described photographing sound is input from the input unit 25 is a case in which photographing by a photographing device takes place near the user terminal 20. Thus, in a case where the above described photographing sound is input from the sound input unit 25 while the bar code image 54B is displayed, a possibility that the bar code image 54B could have been photographed by the photographing device cannot be ignored. Regarding this point, according to the above described detection unit 62 and update unit 68, the membership card ID is updated when the above described photographing sound is input from the sound input unit 25 while the bar code image 54B is displayed. That is, the membership card ID is updated when there is a possibility that the bar code image 54B could have been obtained by other people.

[Example D] For example, the detection unit 62 detects the "predetermined event" based on a result of determination as to "whether or not screen capture is executed in the user terminal 20 while the bar code image 54B is displayed on the display unit 28 of the user terminal 20".

Specifically, the detection unit 62 detects a "fact that the screen capture is executed in the user terminal 20 while the bar code image 54B is displayed on the display unit 28 of the user terminal 20" as the "predetermined event". When it is determined that the screen capture is executed while the bar code image 54B is displayed, the update unit 68 updates the membership card ID.

When the screen capture is executed while the bar code image 54B is displayed, image data indicating the membership card screen 50 including the bar code image 54B is obtained and stored in the storage unit 22. In such a case, a possibility that the image data of the membership card screen 50 stored in the storage unit 22 could be used by other people cannot be ignored. Regarding this point, according to the above described detection unit 62 and update unit 68, the membership card ID is updated when the screen capture is executed while the bar code image 54B is displayed. That is, the membership card ID is updated when there is a possibility that the bar code image 54B could have been obtained by other people.

[Example E] For example, the detection unit 62 detects the "predetermined event" based on a result of determination as to "whether or not an amount of change in a result of detection by the motion detection unit 27 of the user terminal 20 is smaller than a reference amount while the bar code image 54B is displayed on the display unit 28".

Specifically, the detection unit 62 detects a "fact that a situation, in which an amount of change in a result of detection by the motion detection unit 27 of the user terminal 20 is smaller than a reference amount, continues for a predetermined period of time while the bar code image 54B is displayed on the display unit 28" as the "predetermined event". That is, when the above described situation continues for the predetermined period of time, the update unit 68 updates the membership card ID.

"An amount of change in a result of detection by the motion detection unit 27" is, for example, an amount of change in an acceleration detected by an acceleration sensor. Alternatively, "an amount of change in a result of detection by the motion detection unit 27" may be, for example, an amount of change in an angular speed detected by a gyro sensor.

In general, when a user presents a membership card at a shop, the membership card screen 50 (the bar code image 54B) is displayed on the display unit 28. In this case, as the position and posture of the user terminal 20 will change when the bar code image 54B is read by the shop terminal 30, a result of detection by the motion detection unit 27 is changed remarkably.

Therefore, when a situation, in which an amount of change in a result of detection by the motion detection unit 27 is smaller than a reference amount, continues for a predetermined period of time while the bar code image 54B is displayed, there is a possibility that the membership card screen 50 (the bar code image 54B) is displayed on the display unit 28 for a purpose different from a normal purpose. For example, there is a possibility that the user terminal 20 is placed on a desk as other people try to photograph the bar code image 54B using their own photographing device.

Regarding this point, according to the above described detection unit 62 and update unit 68, the membership card ID is updated when a situation, in which an amount of change in a result of detection by the motion detection unit 27 is smaller than a reference amount, continues for a predetermined period of time while the bar code image 54B is displayed. That is, the membership card ID is updated when there is a possibility that the bar code image 54B could have been obtained by other people.

The first sending unit 64 sends data based on a result of detection by the detection unit 62 to the point managing server 10, and the first receiving unit 66 receives the data. Further, the update unit 68 updates the membership card ID stored in the identification information storage unit 60, based on the data received by the first receiving unit 66.

For example, in the user terminal 20, whether or not to update the membership card ID stored in the identification information storage unit 60 is determined based on a result of detection by the detection unit 62, and the first sending unit 64 sends data indicating the result of determination as the "data based on a result of detection by the detection unit 62" to the point managing server 10. For example, when it is determined to update the membership card ID, the first sending unit 64 sends data for requesting update of the membership card ID to the point managing server 10.

Alternatively, the first sending unit 64 sends data indicating a result of detection by the detection unit 62 to the point managing server 10 as the "data based on a result of detection by the detection unit 62". In this case, in the point managing server 10, whether or not to update the membership card ID stored in the identification information storage unit 60 is determined based on the data. When it is determined to update the membership card ID, the update unit 68 updates the membership card ID stored in the identification information storage unit 60.

Below, the second sending unit 70, the second receiving unit 72, and the display control unit 74 will be described. When the membership card ID is updated by the update unit 68, the second sending unit 70 sends to the user terminal 20 data for displaying a bar code image 54B indicating the updated membership card ID on the display unit 28 of the user terminal 20, and the second receiving unit 72 receives the data. Further, the display control unit 74 displays on the display unit 28 a membership card screen 50 including the bar code image 54B indicating the updated membership card ID, based on the data received by the second receiving unit 72.

The "data for displaying the bar code image 54B on the display unit 28 of the user terminal 20" is, for example, data indicating the bar code image 54B. In this case, the second sending unit 70 generates the bar code image 54B based on the updated membership card ID, and sends the bar code image 54B to the user terminal 20.

Alternatively, the "data for displaying the bar code image 54B on the display unit 28 of the user terminal 20" is, for example, data indicating the membership card ID. In this case, the bar code image 54B is generated by the display control unit 74.

Below, processing that is executed in the point system 1 will be described.

In the point system 1, when the membership card program is activated in the user terminal 20, the membership card screen 50 is displayed on the display unit 28. In this case, photographing by the photographing unit 26 and receipt of sound input by the sound input unit 25 begin. Note that photographing by the photographing unit 26 and receipt of sound input by the sound input unit 25 end when the membership card screen 50 is closed.

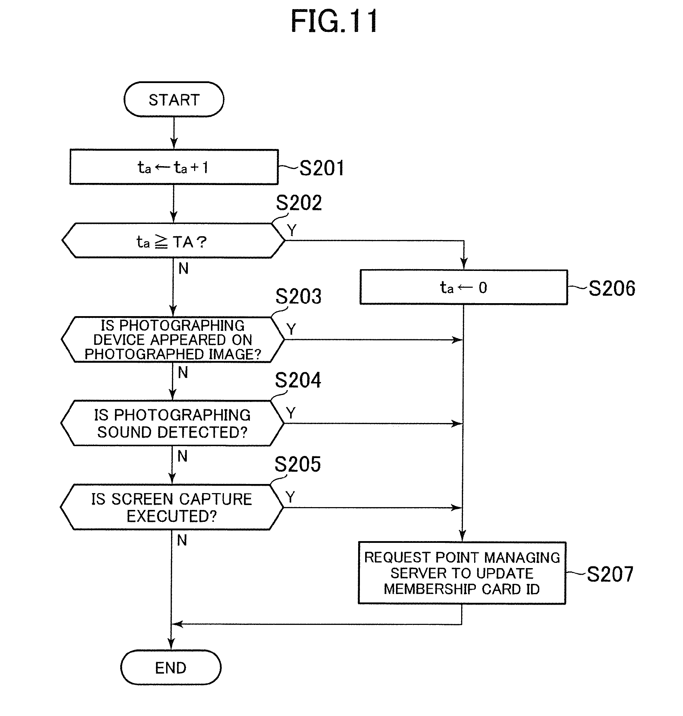

FIG. 11 is a flowchart showing one example of processing that is repetitively executed in the user terminal 20 for a predetermined period of time (for example, 1/60^{th} of a second) while the membership card screen 50 is displayed on the display unit 28. The control unit 21 of the user terminal 20 executes the processing shown in FIG. 11 according to a program, to thereby function as the detection unit 62 and the first sending unit 64. Note that the processing shown in FIG. 11 corresponds to the above described [Example A-1], [Example B-1], [Example C], and [Example D].

When the membership card screen 50 is displayed on the display unit 28, the control unit 21 adds one to the variable *ta* (S201), as shown in FIG. 11.

The variable *ta* is used to measure a period of time having elapsed while the membership card screen 50 is displayed. The variable *ta* is initialized to zero upon start of displaying the membership card screen 50. As described above, this processing is executed for every predetermined period of time (for example, 1/60^{th} of a second), and one is added to the variable *ta* every execution of this processing. Thus, the variable *ta* indicates the above mentioned elapsed period of time in units of a predetermined period of time (for example, 1/60^{th} of a second).

Thereafter, the control unit 21 (the detection unit 62) determines whether or not the variable ta is equal to or larger than a reference value *TA* (S202).

A case in which it is determined that the variable *ta* is equal to or larger than the reference value *TA* refers to a case in which the period of time having elapsed while the membership card screen 50 is displayed (*ta*) becomes equal to or larger than a reference period (*TA*). In this case, the control unit 21 determines to update the membership card ID. That is, the control unit 21 resets the variable *ta* to zero (S206), and the control unit 21 (the first sending unit 64) requests the point managing server 10 to update the membership card ID (S207). In this case, the control unit 21 sends the current membership card ID to the point managing server 10.

Meanwhile, when it is not determined that the variable *ta* is equal to or larger than the reference value *TA,* the control unit 21 (the detection unit 62) determines whether or not a photographing device is appeared on an image photographed by the photographing unit 26 (S203).

As described above, photographing by the photographing unit 26 is executed for every predetermined period of time (for example, 1/60^{th} of a second). Therefore, the control unit 21 obtains the latest photographed image, and determines whether or not a photographing device is appeared on the photographed image. For example, this determination is executed based on general object detection processing for detecting an object appeared on a photographed image.

When it is determined that the photographing device is appeared on the image photographed by the photographing unit 26, the control unit 21 determines to update the membership card ID. In this case, the control unit 21 (the first sending unit 64) requests the point managing server 10 to update the membership card ID (S207).

Meanwhile, when it is determined that no photographing device is appeared on the image photographed by the photographing unit 26, the control unit 21 (the detection unit 62) determines whether or not a photographing sound generated by a photographing device (excluding the user terminal 20 executing this processing) is detected (S204). That is, the control unit 21 determines whether or not the photographing sound is input from the sound input unit 25.

For example, data for determining whether or not a sound input from the sound input unit 25 is a photographing sound is stored in the storage unit 22 of the user terminal 20, and the determination at step S204 is executed based on the data.

For example, sound data (reference sound data) indicating a photographing sound is stored as the above described data. In this case, the control unit 21 calculates similarity between the sound input from the sound input unit 25 and the sound indicated by the reference sound data. When the similarity is in excess of a threshold, the control unit 21 determines that the sound input from the sound input unit 25 is the photographing sound. Meanwhile, when the similarity is not in excess of the threshold, the control unit 21 determines that the sound input from the sound input unit 25 is not the photographing sound.

When it is determined that the photographing sound is detected, the control unit 21 determines to update the membership card ID. In this case, the control unit 21 (the first sending unit 64) requests the point system 1 to update the membership card ID (S207) .

Meanwhile, when it is determined that the photographing sound is not detected, the control unit 21 (the detection unit 62) determines whether or not screen capture is executed (S205). For example, in a case where an operation for the screen capture is performed by a user, the control unit 21 determines that the screen capture is executed.

When it is determined that the screen capture is executed, the control unit 21 determines to update the membership card ID. In this case, the control unit 21 (the first sending unit 64) requests the point managing server 10 to update the membership card ID (S207).

Meanwhile, when it is determined that the screen capture is not executed, the control unit 21 ends this processing without executing step S207. With the above, description on the processing shown in FIG. 11 is completed.

Note that the processing that is executed in the user terminal 20 while the membership card screen 50 is displayed on the display unit 28 is not limited to the processing shown in FIG. 11.

For example, although it has been described in the above that the variable *ta* is initialized to zero at activation of the membership card program, the variable *ta* may be initialized to zero only at initial activation of the membership card program, the variable ta may not be initialized to zero at second and thereafter activations.

When the membership card program is activated more than twice, the same bar code image 54B is resultantly displayed on the display unit 28 twice or more unless the membership card ID is updated. Regarding this point, with the above described arrangement, the variable *ta* indicates the sum of the periods of time when the bar code image 54B is displayed twice or more on the display unit 28. Then, when the sum (*ta*) of the display periods of time of the bar code image 54B reaches the reference period of time (*TA*), update of the membership card ID is requested to the point managing server 10. Note that such processing corresponds to the above described [Example A-2].

For example, steps S201, S202, and S206 in the processing shown in FIG. 11 may be omitted. Further, at least one of steps S203, S204, and S205 may be omitted. Still further, the order of execution of the respective steps is not limited to that in the example shown in FIG. 11.

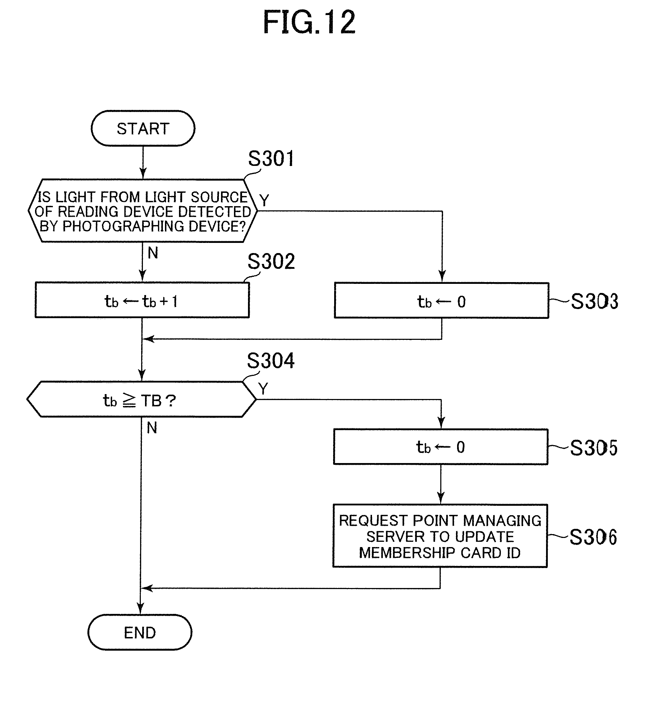

Yet further, for example, instead of the processing shown in FIG. 11, the processing shown in FIG. 12 may be repetitively executed in the user terminal 20 for a predetermined period of time (for example, 1/60^{th} of a second). Note that the processing shown in FIG. 12 corresponds to the above described [Example B-2].

As shown in FIG. 12, the control unit 21 determines whether or not light from the light source of a reading device for reading the bar code image 54B is detected by the photographing unit 26 (S301). Specifically, the control unit 21 determines whether or not light from the light source of the reading device is appeared on an image photographed by the photographing unit 26.

For example, an image that is actually photographed by the photographing unit 26 when the bar code image 54B is read by the reading device is stored in the storage unit 22 of the user terminal 20, as a reference photographed image. In this case, the control unit 21 calculates similarity between the latest image photographed by the photographing unit 26 and the reference photographed image. When the similarity is in excess of a threshold, the control unit 21 determines that the light from the light source of the reading device is detected by the photographing unit 26. Meanwhile, when the similarity is not in excess of the threshold, the control unit 21 determines that the light from the light source of the reading device is not detected by the photographing unit 26.

When it is determined that the light from the light source of the reading device is not detected by the photographing unit 26, the control unit 21 adds one to the variable *tb* (S302) .

The variable *tb* is used to measure a duration of a situation in which the light from the light source of the reading device is not detected by the photographing unit 26 while the membership card screen 50 (the bar code image 54B) is displayed. The variable *tb* is initialized to zero upon start of displaying the membership card screen 50 (the bar code image 54B). As described above, this processing is executed for every predetermined period of time (for example, 1/60^{th} of a second), and one is added to the variable *tb* every execution of this processing. Therefore, the variable *tb* indicates the above described duration in units of a predetermined period of time (for example, 1/60^{th} of a second).

Meanwhile, when it is determined that the light from the light source of the reading device is detected by the photographing unit 26, the control unit 21 resets the variable *tb* to zero (S303).

After execution of step S302 or S303, the control unit 21 (the detection unit 62) determines whether or not the variable *tb* is equal to or larger than a reference value *TB* (S304).

A case in which it is determined that the variable *tb* is equal to or larger than the reference value *TB* is a case in which the duration (*tb*) of a situation in which the light from the light source of the reading device is not detected by the photographing unit 26 is equal to or longer than a reference period of time (TB) while the membership card screen 50 (the bar code image 54B) is displayed. In this case, the control unit 21 determines to update the membership card ID. That is, the control unit 21 resets the variable *tb* to zero (S305), and the control unit 21 (the first sending unit 64) requests the point managing server 10 to update the membership card ID (S306). Step S306 is similar to step S207.

Meanwhile, when it is not determined that the variable *tb* is equal to or larger than the reference value *TB,* the control unit 21 ends this processing without executing step S306. With the above, description on the processing shown in FIG. 12 is completed.

Note that the processing shown in FIG. 12 may be combined with the processing shown in FIG. 11. For example, when it is determined at step S205 that the screen capture is not executed, step S301 may be executed.

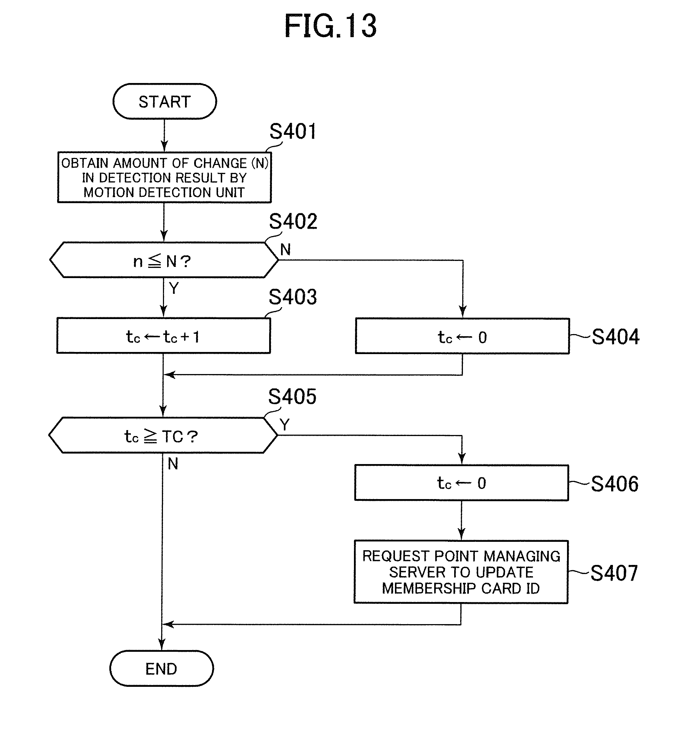

Processing that is executed in the user terminal 20 while the membership card screen 50 is displayed on the display unit 28 is not limited to the processing shown in FIG. 11 or FIG. 12. Specifically, instead of the processing shown in FIG. 11 or FIG. 12, for example, the processing shown in FIG. 13 may be repetitively executed in the user terminal 20 for a predetermined period of time (for example, 1/60^{th} of a second). Note that the processing shown in FIG. 13 corresponds to the above described [Example E].

As shown in FIG. 13, the control unit 21 obtains an amount (*n*) of change in a result of detection by the motion detection unit 27 (S401). As this processing is executed for every predetermined period of time (for example, 1/60^{th} of a second), the control unit 21 compares the result of detection made by the motion detection unit 27 at a time preceding by a predetermined period of time (for example, 1/60^{th} of a second) and the result of detection made by the motion detection unit 27 at the current time, to thereby obtain an amount (*n*) of change in the result of detection by the motion detection unit 27.

For example, the control unit 21 obtains the total amount of changes in accelerations in the respective axial directions detected by the acceleration sensor as the above described change amount (*n*). Alternatively, the control unit 21 obtains the total amount of changes in the angular speeds around the respective axes detected by the gyro sensor as the above described change amount (*n*).

Thereafter, the control unit 21 determines whether or not the change amount (*n*) obtained at step S401 is equal to or smaller than the reference amount (*N*) (S402). When it is determined that the change amount (*n*) is equal to or smaller than the reference amount (*N*), the control unit 21 adds one to a variable *tc* (S403).

The variable *tc* is used to measure a duration of a situation in which an amount (*n*) of change in a result of detection by the motion detection unit 27 is equal to or smaller than a reference amount while the membership card screen 50 (the bar code image 54B) is displayed. The variable *tc* is initialized to zero upon start of displaying the membership card screen 50 (the bar code image 54B). As described above, this processing is executed for every predetermined period of time (for example, 1/60^{th} of a second), and one is added to the variable *tc* every execution of this processing. Thus, the variable *tc* indicates the above described duration in units of a predetermined period of time (for example, 1/60^{th} of a second).

Meanwhile, when it is not determined that the change amount (*n*) is equal to or smaller than the reference amount (*N*), the control unit 21 resets the variable *tc* to zero (S404).

After execution of step S403 or S404, the control unit 21 (the detection unit 62) determines whether or not the variable *tc* is equal to or larger than the reference value *TC* (S405).

A case in which it is determined that the variable *tc* is equal to or larger than the reference value *TC* is a case in which the duration (*tc*) of a situation, in which the amount (*n*) of change in a result of detection by the motion detection unit 27 is equal to or larger than a reference amount (*N*), is equal to or larger than a reference period of time (*TC*) while the membership card screen 50 (the bar code image 54B) is displayed. In this case, the control unit 21 determines to update the membership card ID. That is, the control unit 21 resets the variable *tc* to zero (S406), and the control unit 21 (the first sending unit 64) requests the point managing server 10 to update the membership card ID (S407). Step S407 is similar to step S207.

Meanwhile, when it is not determined that the variable *tc* is equal to or larger than the reference value *TC,* the control unit 21 ends this processing without executing step S407. With the above, description on the processing shown in FIG. 13 is completed.

Note that the processing shown in FIG. 13 may be combined with the processing shown in FIG. 11. For example, when it is determined at step S205 that the screen capture is not executed, step S401 may be executed. Further, the processing shown in FIG. 12 and the processing shown in FIG. 13 may be combined with the processing shown in FIG. 11.

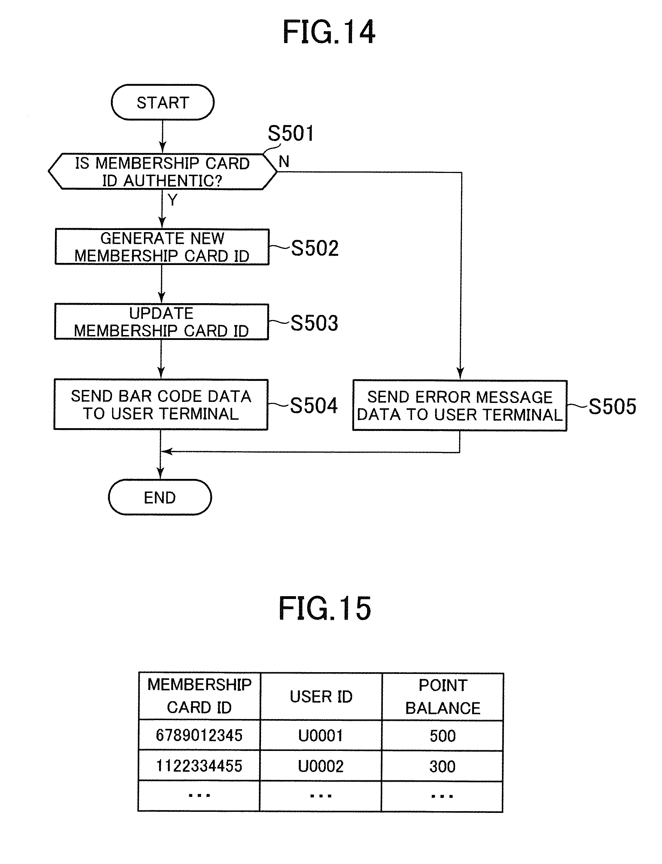

As described above, update of the membership card ID is requested to the point managing server 10 at step S207, S306, S407 in FIGs 11 to 13. FIG. 14 shows one example of processing that is executed in the point managing server 10 upon receipt of the request by the point managing server 10.

As shown in FIG. 14, the control unit 11 of the point managing server 10 determines whether or not the membership card ID received from the terminal 20 is authentic (S501) . That is, the control unit 11 determines whether or not the membership card ID received from the user terminal 20 is registered in the membership card table.

When it is determined that the membership card ID is not registered in the membership card table, the control unit 11 determines that the membership card ID received from the user terminal 20 is not authentic, and sends to the user terminal 20 error message data indicating the fact (S505). In the user terminal 20 having received the error message data, the error message is displayed on the display unit 28.

Meanwhile, when it is determined that the membership card ID is registered in the membership card table, the control unit 11 determines that the membership card ID received from the user terminal 20 is authentic. In this case, the control unit 11 generates a new membership card ID based on a predetermined generation rule (S502).

Note that a generation rule for generating a new membership card ID is defined such that a membership card ID same as an existing membership card ID is not generated. For example, a new membership card ID is generated based on the user ID correlated to the membership card ID received from the user terminal 20 and the current time and date.

After generation of a new membership card ID, the control unit 11 (the update unit 68) accesses the membership card table, and updates the membership card ID received from the user terminal 20 to the new membership card ID generated at step S502 (S503).

For example, assume a case in which the membership card ID received from the user terminal 20 is "0123456789" and the membership card ID newly generated at step S502 is "6789012345". In this case, in the membership card table shown in FIG. 7, the membership card ID "0123456789" is updated to "6789012345". That is, the content of the membership card table is changed from the content shown in FIG. 7 to the content shown in FIG. 15.

When the membership card ID is updated, the control unit 11 (the second sending unit 70) sends to the user terminal 20 data for displaying a bar code image 54B indicating the updated membership card ID on the display unit 28 of the user terminal 20 (S504).

For example, the control unit 11 generates a bar code image 54B indicating the updated membership card ID, and sends to the user terminal 20 data (for example, HTML data) on a membership card screen 50 including the bar code image 54B. In this case, the control unit 21 of the user terminal 20 (the display control unit 74) displays the membership card screen 50 on the display unit 28, based on the data received from the point managing server 10.

Alternatively, the control unit 11 may generate a bar code image 54B indicating the updated membership card ID, and send data indicating the bar code image 54B to the user terminal 20. In this case, the control unit 21 of the user terminal 20 (the display control unit 74) displays a membership card screen 50 including the bar code image 54B on the display unit 28, based on the data received from the point managing server 10.

Alternatively, the control unit 11 may send data indicating the updated membership card ID to the user terminal 20. In this case, the control unit 21 of the user terminal 20 (the display control unit 74) generates a bar code image 54B based on the data received from the point managing server 10, and displays a membership card screen 50 including the bar code image 54B on the display unit 28.

Note that the updated membership card ID is stored in the storage unit 22 of the user terminal 20.

According to the above described point system 1 (an identification information managing system), when there is a possibility that the bar code image 54B displayed on the display unit 28 of the user terminal 20 could have been obtained by other people, the membership card ID is updated, and the bar code image 54B displayed in the display unit 28 is also updated.

Below, assume a case in which, for example, other people obtains the membership card screen 50 (the bar code image 54B) shown in FIG. 8 by photographing, using a portable phone equipped with a photographing function. In this case, steps S203, S204, and S207 in FIG. 11 and steps S501 to S504 in FIG. 12 are executed, whereby the membership card ID is updated as shown in FIG. 15, for example. That is, the membership card ID is updated from "0123456789" to "6789012345".

If the other people presents the photographed membership card screen 50 (the bar code image 54B) at a shop, the membership card ID "0123456789" is sent to the point managing server 10 (see step S101 in FIG. 9). However, as the membership card ID has already been updated from "0123456789" to "6789012345", the membership card ID "0123456789" is determined not authentic (see step S102 in FIG. 9). As a result, use of the point is prevented (see step S104 in FIG. 9).

As described above, according to the point system 1 (an identification information managing system), it is possible to prevent the bar code image 54B from being obtained and used by other people.

Note that as a method for preventing the bar code image 54B from being obtained and used by other people, there is available a method for frequently updating the membership card ID (the bar code image 54B). However, as the length of the membership card ID (the number of digits) is finite, and the number of membership card IDs is limited, frequent update of the membership card ID is not practicable. Moreover, it is necessary to ensure that identification information to be imparted to each user is not duplicate of identification information already imparted to another user, and it is desirable in view of prevention of fraudulent use to avoid impartation of identification information once imparted in the past. Frequent update of the membership card ID in such a condition may result in running out of the membership card ID. Regarding this point, according to the point system 1 (an identification information managing system), the membership card ID is updated in the case where it is determined that there is a possibility that the bar code image 54B could have been obtained by other people. That is, the membership card ID is updated only when update of the membership card ID is necessary. As a result, frequency of update of the membership card ID is reduced.

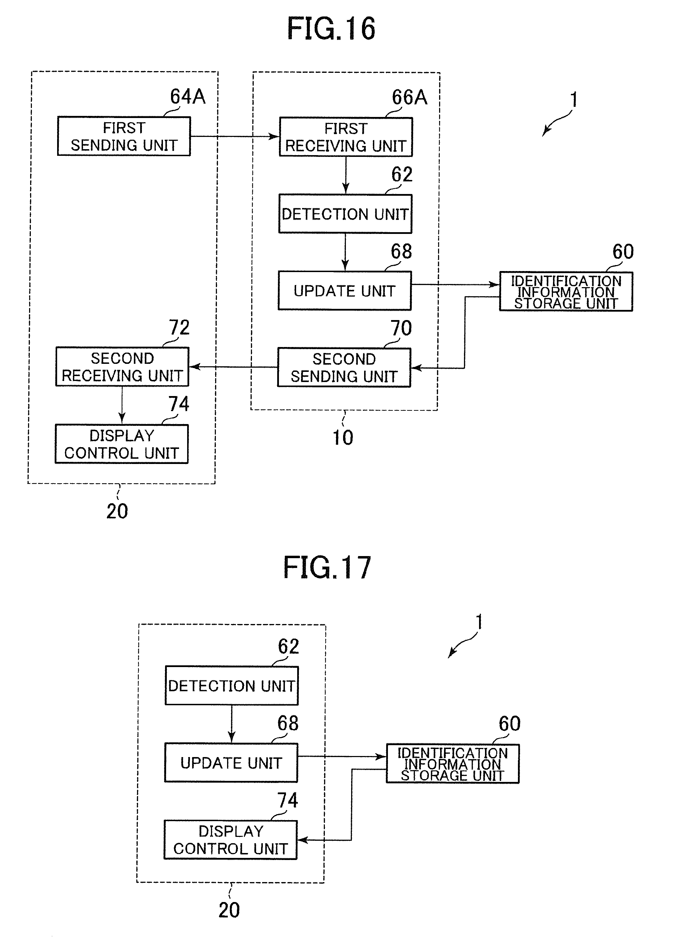

Note that the present invention is not limited to the above described embodiment.
[1] For example, the detection unit 62 may be implemented using the control unit 11 of the point managing server 10. FIG. 16 is a functional block diagram of the point system 1 when the detection unit 62 is implemented using the control unit 11 of the point managing server 10.

In the functional block diagram shown in FIG. 16, the first sending unit 64A, the second receiving unit 72, and the display control unit 74 are included in the user terminal 20. Further, the first receiving unit 66A, the detection unit 62, the update unit 68, and the second sending unit 70 are included in the point managing server 10. Operations of the detection unit 62, the update unit 68, the second sending unit 70, the second receiving unit 72, and the display control unit 74 are basically similar to those shown in FIG. 10, and thus are not described here.

The first sending unit 64A sends to the point managing server 10 data necessary for the detection unit 62 to detect the above mentioned "predetermined event", and the first receiving unit 66A receives the data. In this case, the detection unit 62 detects the above described "predetermined event" based on the data received by the first receiving unit 66A.

For example, in the case of the above described [Example A-1], data indicating the period of time having elapsed while the bar code image 54B is displayed on the display unit 28 is sent by the first sending unit 64A. Further, based on the data, the detection unit 62 determines whether or not a situation in which the bar code image 54B is displayed continues for a reference period of time. When it is determined that the above described elapsed period of time reaches the reference period of time, it is determined to update the membership card ID, and the update unit 68 updates the membership card ID.

Similarly, in the above described [Example A-2], data indicating the period of time having elapsed while the bar code image 54B is displayed on the display unit 28 is sent by the first sending unit 64A. Further, based on the data, the detection unit 62 determines whether or not an accumulation of the periods of time during which the same bar code image 54B is displayed reaches a reference period of time. When it is determined that the above described accumulation reaches the reference period of time, it is determined to update the membership card ID, and the update unit 68 updates the membership card ID.

Further, for example, in the case of the above described [Example B], an image photographed by the photographing unit 26 of the user terminal 20 while the bar code image 54B is displayed on the display unit 28 of the user terminal 20 is sent by the first sending unit 64A.

For example, in the case of the above described [Example B-1], based on the above described photographed image, the detection unit 62 determines whether or not a photographing device is appeared on the above described photographed image while the bar code image 54B is displayed. When it is determined that the photographing device is appeared on the above described photographed image, it is determined to update the membership card ID, and the update unit 68 updates the membership card ID.

Further, for example, in the above described [Example B-2], based on the above described photographed image, the detection unit 62 determines whether or not a situation, in which light from a light source of a reading device is not appeared on the above described photographed image, continues for a reference period of time while the bar code image 54B is displayed. When it is determined that the above described situation continues for the reference period of time, it is determined to update the membership card ID, and the update unit 68 updates the membership card ID.

Note that in the case of [Example B-2], whether or not light from a light source of a reading device is appeared on an image photographed by the photographing unit 26 may be determined by the user terminal 20. Then, data indicating the result of determination may be sent by the first sending unit 64A. Further, based on the data, the detection unit 62 may determine whether or not the situation, in which the light from the light source of the reading device is not appeared on in the image photographed by the photographing unit 26, continues for the reference period of time while the bar code image 54B is displayed. Then, whether or not to update the membership card ID may be determined based on the result of the determination.

Further, for example, in the case of the above described [Example C], data indicating the sound input from the sound input unit 25 while the bar code image 54B is displayed is sent by the first sending unit 64A. Further, based on the data, the detection unit 62 determines whether or not a photographing sound made by a photographing device is input from the sound input unit 25 while the bar code image 54B is displayed. Then, when it is determined that the above described photographing sound is input from the sound input unit 25, it is determined to update the membership card ID, and the update unit 68 updates the membership card ID.

Further, for example, in the case of the above described [Example D], data indicating execution of the screen capture while the bar code image 54B is displayed is sent by the first sending unit 64A. Further, based on the data, the detection unit 62 determines whether or not the screen capture is executed while the bar code image 54B is displayed. Then, when it is determined that the screen capture is executed, it is determined to update the membership card ID, and the update unit 68 updates the membership card ID.

Further, for example, in the above mentioned [Example E], data indicating the result of detection by the motion detection unit 27 while the bar code image 54B is displayed is sent by the first sending unit 64A.

Alternatively, whether or not an amount of change in the result of detection by the motion detection unit 27 while the bar code image 54B is displayed is equal to or smaller than a reference amount is determined in the user terminal 20, and data indicating the result of determination is sent by the first sending unit 64A.

Then, based on the above described data, the detection unit 62 determines whether or not a situation, in which the amount of change in the result of detection by the motion detection unit 27 is equal to or smaller than a reference amount, continues for a reference period of time while the bar code image 54B is displayed. Then, when it is determined that the above described situation continues for the reference period of time, it is determined to update the membership card ID, and the update unit 68 updates the membership card ID.

Note that although the detection unit 62 and the update unit 68 are both implemented in the point managing server 10 in the functional block diagram shown in FIG. 16, the detection unit 62 and the update unit 68 may be implemented in respective different servers. For example, the detection unit 62 may be implemented using a server different from the point managing server 10.
[2] For example, in a case where the user terminal 20 is accessible to the database 15, the update unit 68 may be implemented using the control unit 21 of the user terminal 20. FIG. 17 is a function block diagram of the point system 1 when the update unit 68 is implemented using the control unit 21 of the user terminal 20.

In the functional block diagram shown in FIG. 17, the detection unit 62, the update unit 68, and the display control unit 74 are included in the user terminal 20. Operations of the detection unit 62, the update unit 68, and the display control unit 74 are basically similar to those shown in FIG. 10.

However, in this case, the display control unit 74 obtains the membership card ID updated by the update unit 68 from the membership card table (the identification information storage unit 60), and generates a bar code image 54B indicating the membership card ID. Further, the display control unit 74 displays a membership card screen 50 including the bar code image 54B on the display unit 28.
[3] For example, the present invention can be applied to a system other than the point system 1 for providing a point service. The present invention can be applied to a system such that a bar code image indicating identification information is displayed on a display unit of a user terminal.

## Claims

1. An identification information managing system, comprising:
identification information storage means for storing identification information on a user;
means for displaying an identification code image indicating the identification information on display means of a user terminal;
detection means for detecting a predetermined event indicating that there is a possibility that the identification code image is obtained by other people while the identification code image is displayed on the display means;
update means for updating the identification information stored in the identification information storage means, based on a result of detection by the detection means; and
means for displaying the identification code image indicating the updated identification information on the display means in the case where the identification information is updated.

2. The identification information managing system according to claim 1, wherein
the detection means includes means for detecting the predetermined event, based on a period of time elapsed while the identification code image is displayed on the display means.

3. The identification information managing system according to claim 2, wherein
the detection means includes means for detecting a fact that a situation in which the identification code image is displayed on the display means continues for a reference period of time, as the predetermined event.

4. The identification information managing system according to claim 2, wherein
the detection means includes means for detecting a fact that a sum of periods of time during which a same identification code image is displayed on the display means reaches a reference period of time, as the predetermined event.

5. The identification information managing system according to any one of claims 1 to 4, wherein
the user terminal includes photographing means for photographing an object opposite to the display means, and
the detection means includes means for detecting the predetermined event, based on a result of determination as to whether or not a predetermined object is appeared on an image photographed by the photographing means while the identification code image is displayed on the display means.

6. The identification information managing system according to claim 5, wherein
the detection means includes means for detecting a fact that a situation, in which light from a light source of a reading device for reading the identification code image is not appeared on the image photographed by the photographing means, continues for a reference period of time while the identification code image is displayed on the display means, as the predetermined event.

7. The identification information managing system according to claim 5 or 6, wherein
the detection means includes means for detecting a fact that a photographing device is appeared on the image photographed by the photographing means while the identification code image is displayed on the display means, as the predetermined event.

8. The identification information managing system according to any one of claims 1 to 7, wherein
the user terminal includes sound input means, and
the detection means includes means for detecting the predetermined event, based on a result of determination as to whether or not a predetermined sound is input from the sound input means while the identification code image is displayed on the display means.

9. The identification information managing system according to claim 8, wherein
the detection means includes means for detecting a fact that a photographing sound is input from the sound input means while the identification code image is displayed on the display means, as the predetermined event, the photographing sound being output from a photographing device other than the user terminal in the case where the photographing device executes photographing.

10. The identification information managing system according to any one of claims 1 to 9, wherein
the detection means includes means for detecting the predetermined event, based on a result of determination as to whether or not processing for obtaining image data is executed in the user terminal while the identification code image is displayed on the display means.

11. The identification information managing system according to claim 10, wherein
the detection means includes means for detecting a fact that the processing for obtaining the image data is executed in the user terminal while the identification code image is displayed on the display means, as the predetermined event.

12. The identification information managing system according to any one of claims 1 to 11, wherein
the user terminal includes motion detection means for detecting a motion of the user terminal, and
the detection means includes means for detecting the predetermined event, based on a result of determination as to whether or not a result of detection by the motion detection means while the identification code image is displayed on the display means is a predetermined result.

13. The identification information managing system according to claim 12, wherein
the detection means includes means for detecting a fact that a situation, in which an amount of change in a result of detection by the motion detection means is equal to or smaller than a reference amount, continues for a reference period of time while the identification code image is displayed on the display means, as the predetermined event.

14. The identification information managing system according to any one of claims 1 to 13, further comprising
a server capable of data communication with the user terminal, wherein
the detection means is included in the user terminal,
the update means is included in the server,
the user terminal includes means for sending data based on a result of detection by the detection means to the server,
the server includes means for receiving the data sent from the user terminal, and
the update means updates the identification information stored in the identification information storage means, based on the data received from the user terminal.

15. The identification information managing system according to any one of claims 1 to 13, further comprising
a server capable of data communication with the user terminal,
the detection means and the update means are included in the server,
the user terminal includes means for sending data necessary to detect the predetermined event to the server,
the server includes means for receiving the data sent from the user terminal, and the detection means detects the predetermined event, based on the data received from the user terminal.

16. The identification information managing system according to any one of claims 1 to 13, wherein
the detection means and the update means are included in the user terminal.

17. The identification information managing system according to any one of claims 1 to 16, further comprising:
means for reading the identification code image displayed on the display means, and
authentication processing execution means for executing authentication processing relevant to the identification information indicated by the identification code image, based on content stored in the identification information storage means, in the case where the identification code image displayed on the display means is read.

18. A control method for an identification information managing system, comprising:
a step of accessing identification information storage means for storing identification information on a user;
a step of displaying an identification code image indicating the identification information on display means of a user terminal;
a detection step of detecting a predetermined event indicating that there is a possibility that the identification code image is obtained by other people while the identification code image is displayed on the display means;
an update step of updating the identification information stored in the identification information storage means, based on a result of detection at the detection step; and
a step of displaying the identification code image indicating the updated identification information on the display means in the case where the identification information is updated.

19. An information processing device, comprising:
means for obtaining a result of detection as to whether or not a predetermined event is detected while an identification code image is displayed on display means of a user terminal, the predetermined event indicating that there is a possibility that the identification code image is obtained by other people, and the identification code image indicating identification information stored in identification information storage means for storing identification information on a user; and
means for determining, based on a result of the detection, whether or not to update the identification information stored in the identification information storage means.

20. A program for causing a computer to function as
means for obtaining a result of detection as to whether or not a predetermined event is detected while an identification code image is displayed on display means of a user terminal, the predetermined event indicating that there is a possibility that the identification code image is obtained by other people, and the identification code image indicating identification information stored in identification information storage means for storing identification information on a user; and
means for determining, based on a result of the detection, whether or not to update the identification information stored in the identification information storage means.

21. A computer readable information storage medium storing a program for causing a computer to function as
means for obtaining a result of detection as to whether or not a predetermined event is detected while an identification code image is displayed on display means of a user terminal, the predetermined event indicating that there is a possibility that the identification code image is obtained by other people, and the identification code image indicating identification information stored in identification information storage means for storing identification information on a user; and
means for determining, based on a result of the detection, whether or not to update the identification information stored in the identification information storage means.
